# EUROPEAN PATENT SPECIFICATION

(11) **EP 3 421 262 B1**
(45) Date of publication and mention of the grant of the patent: **02.10.2019**
(21) Application number: 18179591.5
(22) Date of filing: 25.06.2018
(51) Int. Cl.: B60C 9/00, B60C 17/00, B60C 9/02, B60C 9/04

(54) **RUN FLAT TIRE AND METHOD FOR MANUFACTURING SAME**
NOTLAUFREIFEN UND VERFAHREN ZU HERSTELLUNG DESSELBEN
PNEU DE ROULAGE À PLAT ET SON PROCÉDÉ DE FABRICATION

(30) Priority: 26.06.2017 JP 2017124574
(43) Date of publication of application: 02.01.2019
(73) Proprietor: Sumitomo Rubber Industries, Ltd., Kobe-shi, Hyogo-ken 651-0072 (JP)
(72) Inventor: YAMAGUCHI, Eiji, Kobe-shi, Hyogo 651-0072 (JP)
(74) Representative: Manitz Finsterwald Patent- und Rechtsanwaltspartnerschaft mbB

(56) References cited:
- DE-A1- 19 709 884
- JP-A- 2000 016 036
- JP-A- 2006 027 441
- US-A- 6 026 878
- US-A- 6 119 748
- US-A1- 2005 051 251

## Description

### Technical Field

The present invention relates to a run flat tire capable of running even in a punctured state, and a manufacturing method thereof.

### Background Art

Conventionally, there has been known a run flat tire in which a side reinforcing rubber layer having a substantially crescent cross-sectional shape is disposed on an inner side of a carcass at each of side wall portions.

For example, Japanese Patent Publication No. 4720121 (Patent Literature 1) discloses a run flat tire in which a carcass ply is made of steel cords to suppress heat generation of the cords and to improve durability during run flat running.

The side reinforcing rubber layer described above causes an increase in weight of the run flat tire, therefore, it causes deterioration of fuel efficiency. Even for the run flat tire disclosed in Patent Literature 1, improvement in fuel efficiency by weight reduction is expected.

JP 2000 016 036 A discloses a run flat tire comprising the features according to the preamble of claim 1.

US 6 026 878 A discloses a run flat tire comprising features according to a related technology.

US 6 119 748 A also discloses a run flat tire comprising features according to a related technology.

Furthermore, JP 2006 027 441 A discloses a run flat tire comprising features according to a related technology as well.

### Summary of the invention

The present invention was made in view of the above, and a primary object thereof is to provide a run flat tire capable of improving the fuel efficiency by weight reduction.

In one aspect of the present invention, a run flat tire comprises a carcass formed of a carcass ply extending between a pair of bead portions in a toroidal manner and a side reinforcing rubber layer having a substantially crescent cross-sectional shape disposed on an inner side of the carcass at each of sidewall portions, wherein steel cords each including 1 to 4 filaments having a strand diameter in a range of from 0.25 to 0.30 mm are arranged in the carcass ply, and an outer diameter D of each of the steel cords is not less than 0.62 mm.

In another aspect of the invention, initial elongation of each of the steel cords when loaded with 50 N is not more than 0.5%.

In another aspect of the invention, it is preferred that bending rigidity of each of the steel cords is not more than 15 gf·cm.

In another aspect of the invention, it is preferred that compression rigidity of each of the steel cords is not less than 100 N/mm.

In another aspect of the invention, it is preferred that each of the filaments of the steel cords is shaped in a wavy form.

In another aspect of the invention, it is preferred that a maximum thickness T of the side reinforcing rubber layer is not more than 8.0 mm.

In another aspect of the invention, it is preferred that a ratio T/D of the maximum thickness T and the outer diameter D is not more than 12.9.

In another aspect of the invention, a method for manufacturing the run flat tire includes a green tire forming step of forming a green tire by sequentially applying unvulcanized tire components including the unvulcanized side reinforcing rubber layer and the unvulcanized carcass ply onto an outer surface of a rigid core, and a vulcanizing step of introducing the green tire together with the rigid core into a vulcanizing mold and vulcanization molding the green tire.

### Brief Description of the Drawings

Fig. 1 is a tire meridian cross section passing through a rotational axis of a run flat tire according to the present embodiment in a standard state.
Fig. 2 is a cross-sectional view of a steel cord arranged in a carcass ply of the run flat tire of Fig. 1.
Fig. 3 is a diagram illustrating a manner of measuring bending rigidity of the steel cord of Fig. 2.
Fig. 4 is a side view of a filament before being twisted.
Fig. 5 is a flowchart illustrating steps of a method of manufacturing the run flat tire of Fig. 1.

### Description of the Preferred Embodiment

An embodiment of the present invention will now be described in conjunction with accompanying drawings.

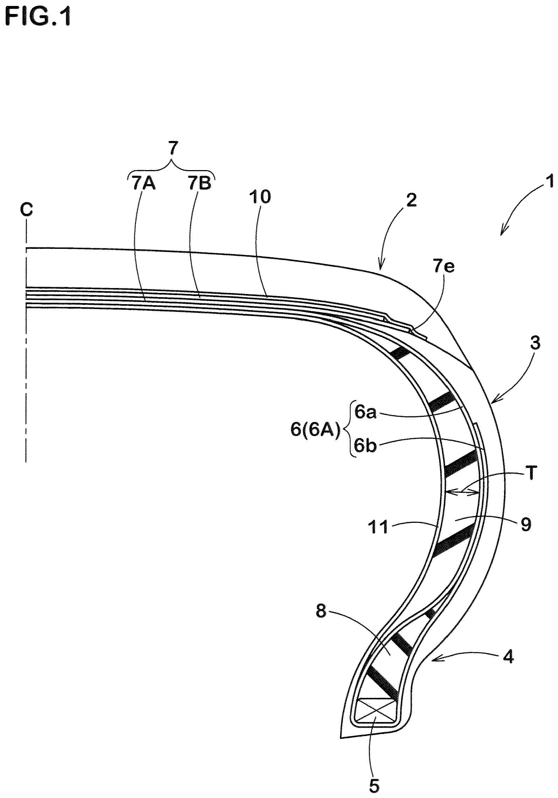

Fig. 1 is a tire meridian section passing through a rotational axis of a run flat tire 1 in this embodiment in a standard state.

The "standard state" is a state in which the tire is mounted on a standard rim, inflated to a standard pressure, and loaded with no tire load. Hereinafter, dimensions and the like of various parts of the tire are values measured in the standard state unless otherwise noted.

The "standard rim" is a wheel rim specified for the concerned tire by a standard included in a standardization system on which the tire is based, for example, the "normal wheel rim" in JATMA, "Design Rim" in TRA, and "Measuring Rim" in ETRTO.

The "standard pressure" is air pressure specified for the concerned tire by a standard included in a standardization system on which the tire is based, for example, the "maximum air pressure" in JATMA, maximum value listed in the "TIRE LOAD LIMITS AT VARIOUS COLD INFLATION PRESSURES" table in TRA, and "INFLATION PRESSURE" in ETRTO.

The run flat tire 1 in this embodiment includes a carcass 6 extending between bead cores 5 of bead portions 4 via a tread portion 2 and sidewall portions 3, a belt layer 7, and a side reinforcing rubber layer 9.

The carcass 6 has at least one carcass ply 6A and includes a main body portion 6a extending in a toroidal manner between a pair of the bead portions 4 and turned up portions 6b each turned up from an inner side to an outer side in a tire axial direction around respective one of the bead cores 5.

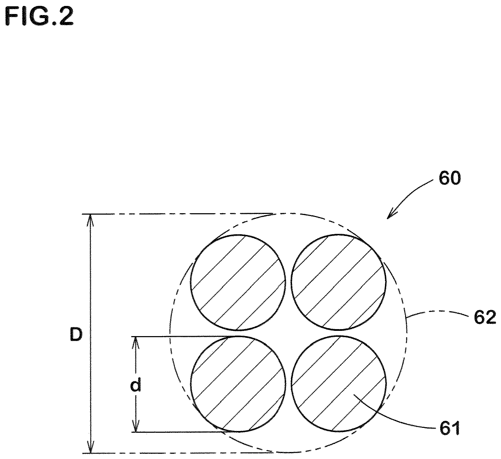

The carcass ply 6A is a cord ply made of carcass cords covered with topping rubber arranged at an angle in a range of from 75 to 90 degrees with respect to a tire equator C, for example in this embodiment. A steel cord 60 (see Fig. 2 to be described later) is used for the carcass cord.

The belt layer 7 is arranged outside the carcass 6 in a tire radial direction and inside the tread portion 2. The belt layer 7 in this embodiment is formed by the radially inner belt ply 7A and a radially outer belt ply 7B. Each of the belt plies 7A and 7B is formed by belt cords made of steel arranged at an angle in about a range of from 10 to 35 degrees with respect to a tire equator C, for example. The belt plies 7A and 7B are overlapped so that the belt cords cross each other, and strongly tighten the carcass 6 to increase rigidity of the tread portion 2. Note that the inner belt ply 7A is wider than the outer belt ply 7B, therefore, outer edges 7e of the belt layer 7 is determined by the inner belt ply 7A. Further, in addition to steel material, highly elastic organic fiber materials such as aramid and rayon can be used for the belt cords as required.

The bead cores 5 are disposed in a pair of bead portions 4. Each of the bead cores 5 may be composed of an inner core arranged on an inner side and an outer core arranged on an outer side in the tire axial direction of the carcass ply 6A as disclosed in Japanese unexamined Patent Application Publication No. 2014-40150.

A bead apex rubber 8 is disposed on an outer side in the tire radial direction of each of the bead cores 5. The bead apex rubber 8 is arranged between the main body portion 6a and the turned up portion 6b of the carcass ply 6A and extends from a bottom surface thereof connected to an outer surface in the tire radial direction of the bead core 5 to an outer end thereof in the tire radial direction in a tapered manner.

Each of the side reinforcing rubber layers 9 is arranged inside the carcass 6 in each of the sidewall portions 3 and is formed to have a substantially crescent cross-sectional shape. Each of the side reinforcing rubber layers 9 is arranged so as to extend from one of shoulder portions of the tread portion 2 to one of the bead portions 4 via one of the sidewall portions 3 adjacent thereto. The side reinforcing rubber layers 9, together with the carcass 6, support the load when the tire is punctured and suppress deflection of the tire.

In this embodiment, a band layer 10 may be arranged outside the belt layer 7 in the tire radial direction. The band layer 10 is formed of at least one band ply in which organic fiber cords are arranged at a small angle so as to be not greater than 10 degrees, for example, with respect to a tire circumferential direction. The band ply may be either a jointless band formed by spirally winding a band cord or a ribbon-shaped belt-like ply, or spliced plies.

Note that an inner liner layer 11 made of air impermeable rubber is formed inside the carcass 6 and the side reinforcing rubber layers 9, that is, formed on a tire inner cavity surface. By suppressing the deflection of the tire by the side reinforcing rubber layers 9, damage of the inner liner layer 11 due to friction is suppressed, therefore, run flat running becomes possible.

As already mentioned, the steel cord 60 is arranged in the carcass ply 6A.

Fig. 2 is a cross-sectional view of the steel cord 60 taken perpendicularly to a longitudinal direction thereof. The steel cord 60 contains 1 to 4 filaments 61.

It is preferred that a strand diameter d of each of the filaments 61 is in a range of from 0.25 to 0.30 mm. If the strand diameter d is less than 0.25 mm, bending rigidity of the steel cord 60 is insufficient, therefore, it is possible to affect durability performance during the run flat running. If the strand diameter d is not less than 0.30 mm, it is possible that the filaments 61 break due to bending fatigue.

The steel cord 60 in this embodiment is formed by four filaments 61 twisted together.

The steel cord 60 has a twist structure of 1 × n (n is an integer in a range of from 1 to 4: 1 × 4 in this embodiment). The steel cord 60 having such a twist structure has high tensile rigidity, therefore, it improves reinforcing effect of the sidewall portions 3 during run flat running, thereby, it contributes to improvement in the durability performance. Further, it improves lateral rigidity of the run flat tire 1 in the standard state and contributes to improvement of steering stability during normal running.

The twist structure of the steel cord 60 may be m × n (m and n are integers in a range of from 1 to 3). The steel cord 60 having such a twist structure has high flexibility and contributes to improvement of ride comfort during normal running.

The steel cord 60 has an outer diameter D not less than 0.62 mm. The steel cord 60 configured as such drastically improves longitudinal rigidity of the sidewall portions 3, therefore, it significantly suppresses the deflection of the sidewall portions 3 during the run flat running. Thereby, it is possible to decrease thickness of the side reinforcing rubber layer 9 without deteriorating the durability performance during the run flat running, therefore, it is possible to increase the fuel efficiency easily by decreasing the weight of the sidewall portions 3.

Note that the outer diameter D of the steel cord 60 is a maximum diameter of a circle 62 circumscribing each filament 61, as shown in Fig. 2.

It is preferred that the bending rigidity per steel cord 60 is not more than 15 gf·cm. The steel cord 60 configured as such has high flexibility, therefore, it contributes to improvement of the ride comfort during normal running.

The "bending rigidity" of the steel cord 60 is measured as follows. A test piece A is obtained by fusion cutting the steel cord 60 at a length of 145 mm such that the filaments of the steel cord 60 are not untwisted, and then the bending rigidity of the test piece A is measured by using a rigidity tester (Model 150-D) available from Taber Industries or the like.

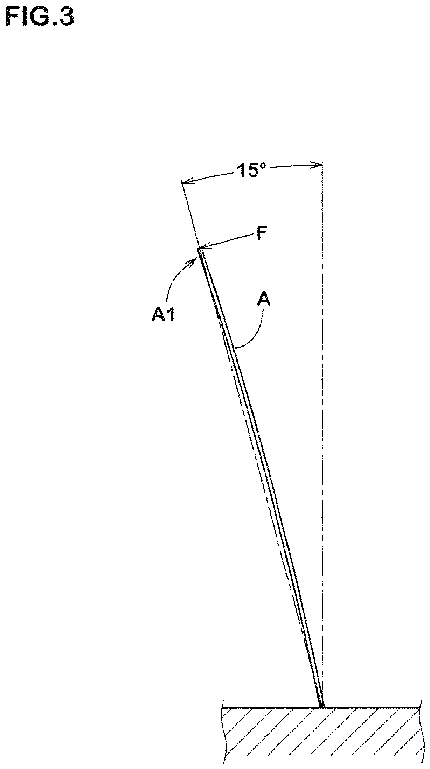

Fig. 3 is a diagram schematically illustrating the manner of measuring the bending rigidity of the steel cord 60. First, one end of the test piece A is fixed and a force F is applied to the other end A1 of the test piece at a length of 100 mm from the fixed end. The bending rigidity of the steel cord 60 can be obtained by measuring resistance (bending rigidity) of the test piece A when an inclination angle of the other end A1 is 15 degrees.

It is preferred that compression rigidity per steel cord 60 is not less than 100 N/mm. The steel cord 60 configured as such has a high compressive elasticity modulus, therefore, it further suppresses the deflection of the sidewall portions 3 during run flat running. Thereby, it is possible to further decrease the thickness of the side reinforcing rubber layer 9 without deteriorating the durability performance during run flat running, thus, it is possible to decrease the weight of the sidewall portions 3, therefore, it is possible to easily increase the fuel efficiency.

The "compression rigidity" of the steel cord 60 in this specification is a value measured according to the following procedure. A cord-containing sample and a non-cord-containing sample of cylindrical rubber (vulcanized at 165 degrees Celsius for 18 minutes) each having a diameter of 25 mm and a height of 25 mm are prepared. In the cord-containing sample, one steel cord 60 having a length of 25 mm is buried in the height direction and at a center of the sample. The non-cord-containing sample has no carcass cords buried therein. Then compressive force required to compress each of the samples at 1 mm in the height direction at a speed of 2 mm/min is measured by using a compression tester. The compressive rigidity of the steel cord 60 is the value obtained by subtracting the compressive force of the non-cord-containing sample from the compressive force of the cord-containing sample.

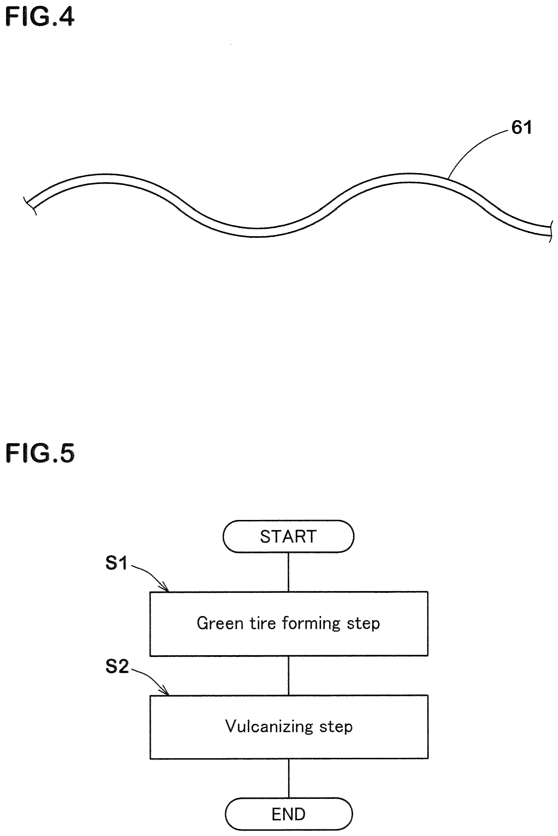

Fig. 4 shows one of the filaments 61 before being twisted. It is preferred that each of the filaments 61 of the steel cord 60 is previously shaped in a wavy form before being twisted. Cord characteristics such as bending rigidity, compressive rigidity, initial elongation, etc. per one steel cord 60 can be easily adjusted by changing the waveform of the filaments 61.

It is preferred that rubber penetration rate in the steel cord 60 is not less than 60%. The steel cord 60 configured as such is excellent in shock absorbing performance, therefore, it is possible to improve cut resistance performance of the sidewall portions 3.

According to the invention, the initial elongation of the steel cord 60 when loaded with 50 N is not more than 0.5%. The steel cord 60 configured as such is excellent in the shock absorbing performance, therefore, it is possible to improve the cut resistance performance of the sidewall portions 3.

The "initial elongation" of the steel cord 60 in this specification is a value measured according to the following procedure. That is, test pieces (N = 10) of the steel cord 60 are prepared and set with a tensile tester at a chuck distance of 250 mm, each of the test pieces is elongated at a speed of 50 mm/min, and elongation percentage of each of the test pieces when the load is 50 N is measured. The initial elongation of the steel cord 60 is obtained by averaging the measured values of the test pieces.

In this embodiment, by forming the carcass ply 6A by
using the steel cords 60, it is possible to have a maximum thickness T of the side reinforcing rubber layer 9 not more than 8.0 mm while maintaining the durability performance during run flat running equal to or higher than that of the conventional run flat tires. Thereby, the weight of the sidewall portions 3 is decreased, therefore, the fuel efficiency of the run flat tire 1 is improved.

Further, it is preferred that a ratio T/D of the maximum thickness T of the side reinforcing rubber layer 9 and the outer diameter D of the steel cord 60 is not more than 12.9. With the steel cord 60 and the side reinforcing rubber layer 9 configured as such, it is possible to improve the fuel efficiency while sufficiently securing the durability performance during run flat running.

Fig. 5 is a flowchart illustrating steps of a method of manufacturing the run flat tire of Fig. 1. The method of manufacturing the run flat tire includes a green tire forming step S1 for forming an unvulcanized green tire and a vulcanizing step S2 for vulcanization molding the green tire.

In the green tire forming step S1, a rigid core having a tire-forming surface on an outer surface thereof is used. For the rigid core in this embodiment, a known rigid core can be used. A green tire is formed by sequentially applying unvulcanized tire components onto the tire-forming surface of the rigid core.

The unvulcanized tire components to be applied to the rigid core include belt-like rubber for forming the inner liner layer 11 and the side reinforcing rubber layer 9, belt-like rubber for forming the carcass ply 6A, the bead cores, the bead apex rubbers, and sidewall rubbers, the belt plies 7A and 7B, the band ply for forming the band layer 10, belt-like rubber for forming tread rubber, and the like.

In the run flat tire 1, the steel cord 60 used for the carcass ply 6A has higher tensile rigidity than organic fiber cord such as rayon in the conventional run flat tire. Thereby, in a manufacturing method in which a green tire main body is inflated (shaping) by inner pressure to have a toroidal shape, the steel cord 60 bites into inner rubber (that is, the inner liner layer 11 and the belt-like rubber for forming the side reinforcing rubber layer 9), therefore, it is difficult to maintain the thickness of the inner liner layer 11 and the side reinforcing rubber layer 9.

In this embodiment, by using the rigid core for applying the unvulcanized tire components, it is suppressed that the steel cord 60 bites into the inner rubbers in the green tire forming step S1. Thereby, it is possible that the thicknesses of the inner liner layer 11 and the side reinforcing rubber layer 9 are easily maintained.

In the vulcanizing step S2, the green tire is introduced into a vulcanizing mold together with the rigid core, and then vulcanization molding is performed. According to this manufacturing method, the green tire is not inflated by a bladder and the like. Therefore, dimensions of the belt-like rubbers are stabilized over the green tire forming step S1 and the vulcanizing step S2. Thereby, by using the steel cord 60 for the carcass ply 6A, it is suppressed that the steel cord 60 bites into the inner rubber, therefore, it is possible that the thicknesses of the inner liner layer 11 and the side reinforcing rubber layer 9 are easily maintained.

while detailed description has been made of the run flat tire and the manufacturing method thereof as embodiments of the present invention, the present invention can be embodied in various forms without being limited to the illustrated embodiment.

### Example (working Example)

Run flat tires of size 245/45R18 having the basic structure shown in Fig. 1 were made by way of test according to the specifications listed in Table 1. Then, each of the test tires was tested for the fuel efficiency and the durability performance during run flat running (run flat durability performance). Major common specifications and the test methods of the test tires are as follows.
Number of carcass ply: one
Cord of belt ply: steel

### < Fuel Efficiency >

Each of the test tires was mounted on a rim (18xJJ), inflated to inner pressure of 180 kPa, and loaded with tire load of 5.17 kN, and then rolling resistance at a speed of 80 km/h was measured by using a rolling resistance tester conforming to the ECE 117 standard. The results are indicated by an index based on Example 1 being 100, wherein a larger numerical value is better.

### < Run Flat Durability Performance >

Each of the test tires was tested for the run flat durability performance according to a test method conforming to the ECE 30 standard. The results are indicated by an index based on Example 1 being 100, wherein a larger numerical value is better.

**Table 1.**

| | | | Ref. 1 | Ex. 1 | Ex. 2 | Ex. 3 | Ex. 4 |
|---|---|---|---|---|---|---|---|
| Filament | Material | | steel | steel | steel | steel | steel |
| | strand diameter d | | 0.2 | 0.25 | 0.25 | 0.28 | 0.3 |
| | | [mm] | | | | | |
| Cord | Twist structure | | 1x4 | 1x4 | 1x4 | 1x4 | 1x4 |
| | Outer diameter D | | 0.50 | 0.63 | 0.62 | 0.71 | 0.76 |
| | | [mm] | | | | | |
| Maximum thickness T | | [mm] | 10.0 | 8.0 | 8.0 | 7.5 | 7.0 |
| Ratio T/D | | | 20.0 | 12.7 | 12.9 | 10.6 | 9.2 |
| Fuel efficiency | | [index] | 80 | 100 | 100 | 105 | 110 |
| Run flat durability performance | | [index] | 100 | 100 | 100 | 100 | 100 |

As is clear from Table 1, it was confirmed that the fuel efficiency of the run-flat tires as Examples was significantly improved while the run flat durability performance of the Examples was maintained at around the same level as Reference.

The run flat tires of size 245/45R18 having the basic structure shown in Fig. 1 and the common specifications shown above were made by way of test according to the specifications listed in Table 2, and then each of the test tires was tested for the ride comfort. The test methods are as follows.

### < Ride Comfort >

Each of the test tires was mounted on all wheels of a European sedan car having rims of 18×8J and inflated to 230 kPa. A test driver drove the test car on a dry asphalt road of a test course with the driver being the only member in the test car, and the ride comfort relating to movement above suspension, hardness on shaking, rigid impression, and the like during the test drive was evaluated by the driver's feeling. The results are indicated by an evaluation point based on Example 5 being 100, wherein a larger numerical value is better.

**Table 2.**

| | | | Ex. 5 | Ex. 6 | Ex. 7 |
|---|---|---|---|---|---|
| Filament | Material | | steel | steel | steel |
| | strand diameter d | | 0.25 | 0.25 | 0.25 |
| | | [mm] | | | |
| Cord | Twist structure | | 1x4 | 1x4 | 1x4 |
| | Outer diameter D | | 0.63 | 0.65 | 0.68 |
| | | [mm] | | | |
| Bending rigidity | | [gf·cm] | 12 | 15 | 18 |
| Ride comfort | | | 110 | 100 | 90 |
| [evaluation point] | | | | | |

The run flat tires of size 245/45R18 having the basic structure shown in Fig. 1 and the common specifications shown above were made by way of test according to the specifications listed in Table 3, and then each of the test tires was tested for the fuel efficiency and the run flat durability performance. The test methods are same as the above and the results are indicated by an evaluation point based on Example 8 being 100.

**Table 3.**

| | | | Ex. 8 | Ex. 9 | Ex. 10 |
|---|---|---|---|---|---|
| Filament | Material | | steel | steel | steel |
| | Strand diameter d | | 0.25 | 0.25 | 0.25 |
| | | [mm] | | | |
| Cord | Twist structure | | 1x4 | 1x4 | 1x4 |
| | Outer diameter D | | 0.63 | 0.65 | 0.68 |
| | | [mm] | | | |
| Compression rigidity | | [N/mm] | 110 | 100 | 90 |
| Fuel efficiency | | [index] | 105 | 100 | 95 |
| Run flat durability performance | | | 100 | 100 | 100 |
| | | [index] | | | |

The run flat tires of size 245/45R18 having the basic structure shown in Fig. 1 and the common specifications shown above were made by way of test according to the specifications listed in Tables 4 and 5, and then each of the test tires was tested for the cut resistance performance. The test methods are as follows.

### < Cut Resistance Performance >

Each of the test tires was mounted on the European sedan car and an actual test run was performed. Then the number of cuts that occurred on both sides of the sidewall of each of the test tires after the test run was counted visually. The results are indicated by an index based on Examples 11 and 14 being 100, wherein the larger the numerical value, the less the number of the cuts is, which is better.

**Table 4.**

| | | | Ex. 11 | Ex. 12 | Ex. 13 |
|---|---|---|---|---|---|
| Filament | Material | | steel | steel | steel |
| | Strand diameter d | | 0.25 | 0.25 | 0.25 |
| | | [mm] | | | |
| Cord | Twist structure | | 1x4 | 1x4 | 1x4 |
| | Outer diameter D | | 0.68 | 0.65 | 0.63 |
| | | [mm] | | | |
| Rubber penetration rate | | [%] | 70 | 60 | 50 |
| Cut resistance performance | | | 110 | 100 | 90 |
| | | [evaluation point] | | | |

**Table 5.**

| | | | Ex. 14 | Ex. 15 | Ex. 16 |
|---|---|---|---|---|---|
| Filament | Material | | steel | steel | steel |
| | Strand diameter d | | 0.25 | 0.25 | 0.25 |
| | | [mm] | | | |
| Cord | Twist structure | | 1x4 | 1x4 | 1x4 |
| | Outer diameter D | | 0.63 | 0.65 | 0.68 |
| | | [mm] | | | |
| Initial elongation | | [%] | 0.4 | 0.5 | 0.6 |
| Cut resistance performance | | | 110 | 100 | 90 |
| [evaluation point] | | | | | |

## Claims

1. A run flat tire (1) comprising a carcass (6) formed of a carcass ply (6A) extending between a pair of bead portions (4) in a toroidal manner and a side reinforcing rubber layer (9) having a substantially crescent cross-sectional shape disposed on an inner side of the carcass (6) at each of sidewall portions (3), wherein
steel cords (60) each including 1 to 4 filaments (61) having a strand diameter d in a range of from 0.25 to 0.30 mm are arranged in the carcass ply (6A), wherein an outer diameter D of each of the steel cords (60) is not less than 0.62mm, **characterized in that**
an initial elongation of each of the steel cords (60) when loaded with 50 N is not more than 0.5%.

2. The run flat tire (1) according to claim 1, wherein
bending rigidity of each of the steel cords (60) is not more than 15 gf·cm, wherein the bending rigidity is determined by fusion cutting the steel cord (60) at a length of 145 mm such that the filaments (61) of the steel cord (60) are not untwisted, and then measuring the bending rigidity by using a rigidity tester.

3. The run flat tire (1) according to claim 1 or 2, wherein
compression rigidity of each of the steel cords (60) is not less than 100 N/mm, wherein the compression rigidity is determined by measuring a compressive force required to compress a cord-containing sample and a non-cord-containing sample of cylindrical rubber by 1 mm and subtracting the compressive force of the non-cord-containing sample from the compressive force of the cord-containing sample, wherein each sample of cylindrical rubber has a diameter of 25mm and a height of 25mm and was vulcanized at 165° Celsius for 18 minutes.

4. The run flat tire (1) according to any one of claims 1 to 3, wherein
each of the filaments (61) of the steel cords (60) is shaped in a wavy form.

5. The run flat tire (1) according to any one of claims 1 to 4, wherein
a maximum thickness T of the side reinforcing rubber layer (9) is not more than 8.0 mm.

6. The run flat tire (1) according to claim 5, wherein
a ratio T/D of the maximum thickness T and the outer diameter D is not more than 12.9.

7. A method for manufacturing a run flat tire (1) comprising a carcass (6) formed of a carcass ply (6A) extending between a pair of bead portions (4) in a toroidal manner and a side reinforcing rubber layer (9) having a substantially crescent cross-sectional shape disposed on an inner side of the carcass (6) at each of sidewall portions (3), wherein steel cords (60) each including 1 to 4 filaments (61) having a strand diameter d in a range of from 0.25 to 0.30 mm are arranged in the carcass ply (6A) and an outer diameter D of each of the steel cords (60) is not less than 0.62 mm, and an initial elongation of each of the steel cords (60) when loaded with 50N is not more than 0.5%, the method including:
a green tire forming step of forming a green tire by sequentially applying unvulcanized tire components including the unvulcanized side reinforcing rubber layer (9) and the unvulcanized carcass ply (6A) onto an outer surface of a rigid core, and
a vulcanizing step of introducing the green tire together with the rigid core into a vulcanizing mold and vulcanization molding the green tire.

## Patentansprüche

1. Notlaufreifen (1), der eine Karkasse (6), die aus einer Karkassenlage (6A) gebildet ist, welche sich zwischen einem Paar von Wulstabschnitten (4) auf eine toroidale Weise erstreckt, und eine Seitenverstärkungs-Gummischicht (9) umfasst, die eine im Wesentlichen zunehmende Querschnittsform aufweist, die an einer Innenseite der Karkasse (6) an jeweiligen Seitenwandabschnitten (3) angeordnet ist, wobei
Stahlkorde (60), die jeweils 1 bis 4 Filamente (61) mit einem Litzendurchmesser d in einem Bereich von 0,25 bis 0,30 mm aufweisen, in der Karkassenlage (6A) angeordnet sind, wobei ein Außendurchmesser D jedes der Stahlkorde (60) nicht geringer als 0,62 mm ist,
**dadurch gekennzeichnet, dass**
eine anfängliche Elongation jedes der Stahlkorde (60), wenn er mit 50 N belastet ist, nicht mehr als 0,5% beträgt.

2. Notlaufreifen (1) nach Anspruch 1, wobei
eine Biegesteifigkeit jedes der Stahlkorde (60) nicht größer als 15 gf·cm ist, wobei die Biegesteifigkeit durch Schmelzschneiden des Stahlkords (60) bei einer Länge von 145 mm derart ermittelt wird, dass die Filamente (61) des Stahlkords (60) nicht aufgedreht sind, und die Biegesteifigkeit anschließend unter Verwendung eines Steifigkeitsprüfgeräts gemessen wird.

3. Notlaufreifen (1) nach Anspruch 1 oder 2, wobei
eine Kompressionssteifigkeit jedes der Stahlkorde (60) nicht geringer als 100 N/mm ist, wobei die Kompressionssteifigkeit ermittelt wird, indem eine Kompressionskraft gemessen wird, die erforderlich ist, um eine einen Kord enthaltende Probe und eine keinen Kord enthaltende Probe eines zylindrischen Gummis um 1 mm zu komprimieren, und indem die Kompressionskraft der keinen Kord enthaltenden Probe von der Kompressionskraft der einen Kord enthaltenden Probe subtrahiert wird, wobei jede Probe des zylindrischen Gummis einen Durchmesser von 25 mm und eine Höhe von 25 mm aufweist und bei 165° Celsius für 18 Minuten vulkanisiert wurde.

4. Notlaufreifen (1) nach einem der Ansprüche 1 bis 3, wobei
jedes der Filamente (61) der Stahlkorde (60) in einer Wellenform geformt ist.

5. Notlaufreifen (1) nach einem der Ansprüche 1 bis 4, wobei
eine maximale Dicke T der Seitenverstärkungs-Gummischicht (9) nicht mehr als 8,0 mm beträgt.

6. Notlaufreifen (1) nach Anspruch 5, wobei
ein Verhältnis T/D der maximalen Dicke T und des Außendurchmessers D nicht mehr als 12,9 beträgt.

7. Verfahren zum Herstellen eines Notlaufreifens (1), der eine Karkasse (6), die aus einer Karkassenlage (6A) gebildet ist, welche sich zwischen einem Paar von Wulstabschnitten (4) auf eine toroidale Weise erstreckt, und eine Seitenverstärkungs-Gummischicht (9) umfasst, die eine im Wesentlichen zunehmende Querschnittsform aufweist, die an einer Innenseite der Karkasse (6) an jeweiligen Seitenwandabschnitten (3) angeordnet ist, wobei Stahlkorde (60), die jeweils 1 bis 4 Filamente (61) mit einem Litzendurchmesser d in einem Bereich von 0,25 bis 0,30 mm aufweisen, in der Karkassenlage (6A) angeordnet sind, wobei ein Außendurchmesser D jedes der Stahlkorde (60) nicht geringer als 0,62 mm ist und wobei eine anfängliche Elongation jedes der Stahlkorde (60), wenn er mit 50 N belastet ist, nicht mehr als 0,5% beträgt,
wobei das Verfahren umfasst:
einen Rohreifen-Formungsschritt zum Formen eines Rohreifens durch sequentielles Auftragen unvulkanisierter Reifenkomponenten, welche die unvulkanisierte Seitenverstärkungs-Gummischicht (9) und die unvulkanisierte Karkassenlage (6A) umfassen, auf eine Außenfläche eines starren Kerns und
einen Vulkanisierungsschritt mit Einbringen des Rohreifens zusammen mit dem starren Kern in eine Vulkanisierungsform und mit Vulkanisierungsformen des Rohreifens.

## Revendications

1. Pneumatique pour roulage à plat (1) comprenant une carcasse (6) formée d'une nappe de carcasse (6A) s'étendant entre une paire de parties talon (4) d'une manière toroïdale et une couche de caoutchouc de renforcement latéral (9) ayant une forme en section transversale sensiblement en croissant disposée sur un côté intérieur de la carcasse (6) au niveau de chacune de parties flanc (3), dans lequel
des câbles en acier (60) incluant chacun 1 à 4 filaments (61) ayant un diamètre de fil d dans une plage de 0,25 à 0,30 mm sont disposés dans la nappe de carcasse (6A), un diamètre extérieur D de chacun des câbles en acier (60) n'étant pas inférieur à 0,62 mm,
**caractérisé en ce**
**qu'**un allongement initial de chacun des câbles en acier (60) sous une charge de 50 N ne dépasse pas 0,5 %.

2. Pneumatique pour roulage à plat (1) selon la revendication 1, dans lequel
la rigidité à la flexion de chacun des câbles en acier (60) n'est pas supérieure à 15 gf·cm, la rigidité à la flexion étant déterminée en découpant par fusion le câble en acier (60) sur une longueur de 145 mm de telle sorte que les filaments (61) du câble en acier (60) ne soient pas détorsadés et en mesurant ensuite la rigidité à la flexion en utilisant un testeur de rigidité.

3. Pneumatique pour roulage à plat (1) selon la revendication 1 ou 2, dans lequel
la rigidité à la compression de chacun des câbles en acier (60) n'est pas inférieure à 100 N/mm, la rigidité à la compression étant déterminée en mesurant une force de compression nécessaire pour comprimer de 1 mm un échantillon contenant le câble et un échantillon ne contenant pas le câble en caoutchouc cylindrique et en soustrayant la force de compression de l'échantillon ne contenant pas le câble de la force de compression de l'échantillon contenant le câble, chaque échantillon de caoutchouc cylindrique ayant un diamètre de 25 mm et une hauteur de 25 mm et étant vulcanisé à 165 °C pendant 18 minutes.

4. Pneumatique pour roulage à plat (1) selon l'une quelconque des revendications 1 à 3, dans lequel
chacun des filaments (61) des câbles en acier (60) présente une forme ondulée.

5. Pneumatique pour roulage à plat (1) selon l'une quelconque des revendications 1 à 4, dans lequel
une épaisseur maximale T de la couche de caoutchouc de renforcement latéral (9) n'est pas supérieure à 8,0 mm.

6. Pneumatique pour roulage à plat (1) selon la revendication 5, dans lequel
un rapport T/D de l'épaisseur maximale T sur le diamètre extérieur D n'est pas supérieur à 12,9.

7. Procédé de fabrication d'un pneumatique pour roulage à plat (1) comprenant une carcasse (6) formée d'une nappe de carcasse (6A) s'étendant entre une paire de parties talon (4) d'une manière toroïdale et une couche de caoutchouc de renforcement latéral (9) ayant une forme en section transversale sensiblement en croissant disposée sur un côté intérieur de la carcasse (6) au niveau de chacune de parties flanc (3), dans lequel des câbles en acier (60) incluant chacun 1 à 4 filaments (61) ayant un diamètre de fil d dans une plage de 0,25 à 0,30 mm sont disposés dans la nappe de carcasse (6A), un diamètre extérieur D de chacun des câbles en acier (60) n'étant pas inférieur à 0,62 mm, et un allongement initial de chacun des câbles en acier (60) sous une charge de 50 N n'est pas supérieur à 0,5 %,
le procédé incluant :
une étape de formation de pneumatique cru consistant à former un pneumatique cru en appliquant séquentiellement des composants de pneumatique non vulcanisés incluant la couche de caoutchouc de renforcement latéral (9) non vulcanisée et la nappe de carcasse (6A) non vulcanisée sur une surface extérieure d'un noyau rigide, et
une étape de vulcanisation consistant à introduire le pneumatique cru avec le noyau rigide dans un moule de vulcanisation et à mouler par vulcanisation le pneumatique cru.
